# EUROPEAN PATENT SPECIFICATION

(11) **EP 4 460 538 B1**
(45) Date of publication and mention of the grant of the patent: **11.02.2026**
(21) Application number: 22843736.4
(22) Date of filing: 22.12.2022
(51) Int. Cl.: C08L 63/00, C08K 5/526, C08K 7/22, C08L 9/02

(54) **ONE-COMPONENT EXPANDABLE THERMOSETTING EPOXY COMPOSITION WITH IMPROVED STORAGE STABILITY**
EINKOMPONENTIGE EXPANDIERBARE WÄRMEHÄRTENDE EPOXIDZUSAMMENSETZUNG MIT VERBESSERTER LAGERSTABILITÄT
COMPOSITION ÉPOXY THERMODURCISSABLE EXPANSIBLE À UN COMPOSANT AYANT UNE STABILITÉ DE STOCKAGE AMÉLIORÉE

(30) Priority: 03.01.2022 EP 22150084
(43) Date of publication of application: 13.11.2024
(73) Proprietor: Sika Technology AG, 6340 Baar (CH)
(72) Inventor: DELGADO TORRONTEGUI, Mabell, 8965 Berikon (CH)
(74) Representative: Sika Patent Attorneys
(86) International application number: PCT/EP2022/087426
(87) International publication number: WO 2023/126298

(56) References cited:
- US-A1- 2003 186 049
- US-A1- 2011 028 617
- US-B1- 6 573 309
- XU SHIAI ET AL: "Mechanical properties and morphologies of carboxyl-terminated butadiene acrylonitrile liquid rubber/epoxy blends compatilibilzed by pre-crosslinking", MATERIALS, M D P I AG, CH, vol. 9, no. 8, 1 January 2016 (2016-01-01), pages 1 - 12, XP002806738, ISSN: 1996-1944, DOI: 10.3390/MA9080640

## Description

### Technical field

The present invention pertains to the field of thermally expandable one-component thermosetting epoxy resin composition, in particular for the production of structural foams and a reinforcing element for hollow structures which comprise such a thermally expandable composition, a method for producing such reinforcing elements, their use for reinforcing a hollow structure and a method for reinforcing a hollow structure.

### Prior art

An important area of application of thermally expandable, thermosetting epoxy resin additives is found in vehicle construction, especially when foaming cavities in the body-in-white.

Manufactured products often contain openings and cavities or other hollow parts that result from the manufacturing process and / or are designed for other reasons such as weight reduction. Motor vehicles, for example, comprise several such openings and cavities in the entire vehicle, for example in the vehicle pillars.

It is often desirable to reinforce such openings and cavities with reinforcement elements built into the opening or cavity to reinforce the hollow structure of the manufactured product, for example a vehicle pillar, so that it becomes more resistant to mechanical stress, but with the advantage maintains the low weight of the hollow structure.

Such elements, which are used for the reinforcement, often consist of a carrier made of plastic, metal or another rigid material and one or more layers of an epoxy resin additive attached to it, in particular by injection molding are able to expand their volume when heat or some other physical or chemical form of energy is introduced. Such components can also consist entirely of expandable material. Using an appropriate construction, it is possible to insert the reinforcement element into the cavity of the structure to be reinforced during the manufacturing process, but at the same time to make the inner walls and / or the cavities of the structure to be reinforced accessible to liquids. For example, during the manufacturing process of a vehicle, the hollow parts of a metal frame can still be largely covered by an electro-coating liquid while the reinforcement elements are already in place. During a subsequent heat treatment step, the epoxy resin composition expands and the reinforcing element fills, or reinforces, the cavities.

For example, the document US 2004/0204551 describes a material suitable for reinforcing vehicles in the transportation industry. Said material contains an epoxy resin, a curing agent and an epoxy/elastomer adduct including an epoxy component that is at least partially reacted with an elastomer, wherein the elastomer includes a butyl nitrile rubber.

US2003/186049 A1 discloses discloses heat expandable adhesive comprising epoxy resin and an epoxy-carboxyl terminated butylnitrile adduct.

Thermally expandable epoxy resin compositions currently used often consist of solid epoxy resins. These compositions also contain blowing agents. The activation of the epoxy resin takes place under activation conditions, such as elevated temperature, while at the same time the blowing agent decomposes and releases gases such as nitrogen or carbon monoxide or physically expands. This leads to the volume expansion mentioned above and the formation of a stable foam which ideally fills the cavity as intended and adheres to its walls.

Such thermally expandable epoxy resin compositions currently have limited storage stability that is reflected in a reduction in the expansion properties upon activation conditions over time. There is a need for thermally expandable epoxy resin compositions with improved storage stability.

### Summary of the invention

It is an object of the present invention, therefore, to provide thermally expandable epoxy resin compositions with improved storage stability, especially more constant expansion properties upon activation conditions after longer storage time, preferably storage at 40 °C for two weeks.

Surprisingly it has been found that this object can be achieved by the one-component thermosetting epoxy composition as defined in Claim 1. In addition, these one-component thermosetting epoxy compositions showed good mechanical properties and good adhesion on metallic substrates.

Further aspects of the invention are subjects of further independent claims. Particularly preferred embodiments of the invention are subjects of the dependent claims.

### Certain embodiments of the invention

The present invention therefore relates to a one-component thermosetting epoxy resin composition, comprising
a) at least one epoxy resin **A** having on average more than one epoxide group per molecule;
b) at least one latent hardener for epoxy resins; and
c) at least one physical or chemical blowing agent **BA;** and
d) at least one carboxyl group containing acrylonitrile/butadiene rubber **ABR,** preferably with a Mooney Viscosity (ML 1+4 at 100°C) of 20 - 60 MU (Mooney units); and
e) 0.075 - 0.5 wt.-%, preferably 0.08 - 0.4 wt.-%, of a composition **KP** comprising a blend of at least two different phosphites of the structure of formula (I) 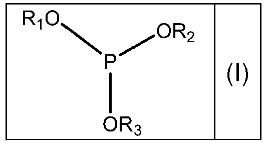 wherein R₁, R₂, and R₃ are independently selected alkylated aryl groups of the structure of formula (II) 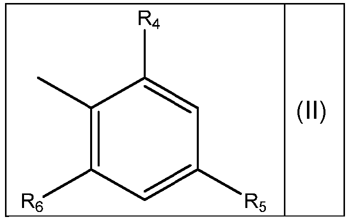 wherein R₄, R₅, and R₆ are independently selected from the group consisting of hydrogen and C1- C6 alkyl, provided that at least one of R₄, R₅, and R₆ is not hydrogen, based on the total amount of carboxyl group containing acrylonitrile/butadiene rubber **ABR.**

The epoxy resin composition is one-component, meaning that the constituents of the epoxy resin composition, more particularly the epoxy resin and the hardener, are present in one component, without curing taking place at usual ambient temperature or room temperature. It can therefore be handled in this form, whereas with two-component systems the components cannot be mixed until immediately prior to use.

The curing of the one-component epoxy resin composition is accomplished by heating, typically at a temperature of more than 70°C, as in the range from 100 to 220°C, for example.

The prefix "poly" in expressions such as polyol or polyisocyanate denotes that the compound has two or more of the stated groups. A polyisocyanate, for example, is a compound having two or more isocyanate groups.

The expression "independently of one another" as used below means that in the same molecule, two or more identically denoted substituents may have identical or different meanings in accordance with the definition.

The dashed lines in the formulae in this document represent in each case the bond between the substituent in question and the associated remainder of the molecule.

Room temperature refers here to a temperature of 23°C, unless otherwise indicated.

The thermosetting one-component epoxy resin composition comprises at least one epoxy resin **A** having on average more than one epoxide group per molecule. The epoxide group is preferably in the form of a glycidyl ether group.

The fraction of the epoxy resin **A** having on average more than one epoxide group per molecule is preferably from 30 - 90 wt%, 35 - 85 wt%, 40 - 75 wt%, more preferably 45 - 60 wt%, based on the total weight of the one-component thermosetting epoxy resin composition.

The epoxy resin **A** having on average more than one epoxide group per molecule is preferably a liquid epoxy resin or a solid epoxy resin, more preferably a solid epoxy resin. The term "solid epoxy resin" is very familiar to the person skilled in the epoxide art and is used in contrast to "liquid epoxy resins". The glass transition temperature of solid resins is above room temperature, meaning that at room temperature they can be comminuted into pourable powders. It is preferred if more than 70 wt.-%, more preferred more than 80 wt.-%, more than 90 wt.-%, more than 95 wt.-%, more than 98 wt.-%, of the epoxy resin A is a solid epoxy resin.

Preferred epoxy resins have the formula (III)

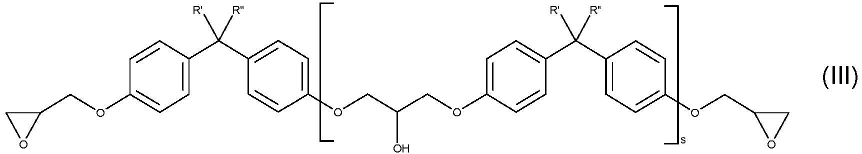

In this formula, the substituents R' and R" independently of one another are either H or CH₃.

In solid epoxy resins, the index s has a value of > 1.5, more particularly from 2 to 12.

Solid epoxy resins of this kind are available commercially, for example, from Dow or Huntsman or Hexion.

Compounds of the formula (III) having an index s of 1 to 1.5 are referred to by the person skilled in the art as semi-solid epoxy resins. For the purposes of the present invention, they are considered likewise to be solid resins. Preferred solid epoxy resins, however, are epoxy resins in the narrower sense, in other words where the index s has a value of > 1.5.

In the case of liquid epoxy resins, the index s has a value of less than 1. Preferably s has a value of less than 0.2.

The resins in question are therefore preferably diglycidyl ethers of bisphenol A (DGEBA), of bisphenol F and also of bisphenol A/F. Liquid resins of these kinds are available for example as Araldite^{®} GY 250, Araldite^{®} PY 304, Araldite^{®} GY 282 (Huntsman) or D.E.R. ^{™} 331 or D.E.R. ^{™} 330 (Dow) or Epikote 828 (Hexion).

Of further suitability as epoxy resin **A** are what are called epoxy novolacs. These compounds have, in particular, the following formula: 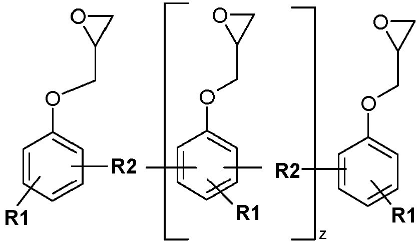 where **R2** = 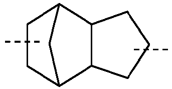 or CH₂, **R1** = H or methyl and z = 0 to 7.

More particularly these are phenol-epoxy or cresol-epoxy novolacs (**R2** = CH₂).

Epoxy resins of these kinds are available commercially under the tradename EPN or ECN and also Tactix^{®} from Huntsman, or within the product series D.E.N. ^{™} from Dow Chemical.

The epoxy resin **A** is preferably a solid epoxy resin of the formula (III).

The thermosetting one-component epoxy resin composition further comprises at least one latent hardener for epoxy resins. Latent hardeners are substantially inert at room temperature and are activated by elevated temperature, typically at temperatures of 70°C or more, thereby initiating the curing reaction. The customary latent hardeners for epoxy resins can be used. Preference is given to a latent epoxy resin hardener containing nitrogen.

The latent hardener is preferably selected from dicyandiamide, guanamines, guanidines, aminoguanidines and derivatives thereof, substituted ureas, imidazoles and amine complexes, preferably dicyandiamide.

The latent hardener is preferably used in a stoichiometric amount based on the epoxy groups in the composition. The molar ratio of the epoxy groups to the active hydrogen of the latent hardener is preferably 0.8 to 1.2, in particular 0.9 to 1.1, preferably 0.95 to 1.05.

The fraction of the latent hardener is preferably 0.1 to 15 wt%, more preferably 0.2 to 5 wt%, more particularly 0.5 - 3 wt%, based on the total weight of the epoxy resin composition.

The one-component thermosetting epoxy resin composition comprises at least one carboxyl group (e.g., carboxylic acid groups) containing acrylonitrile/butadiene rubber **ABR.** The carboxyl group containing acrylonitrile/butadiene rubbers may also include pendant carboxy or carboxyl groups.

The carboxyl group containing acrylonitrile/butadiene rubbers **ABR** preferably have a carboxyl content of 0.005 equivalents per hundred rubber (EPHR) to 0.4 EPHR, more preferably from 0.01 EPHR to 0.2 EPHR and even more preferably from 0.05 EPHR to 0.1 EPHR.

For the carboxyl group containing acrylonitrile/butadiene rubbers **ABR,** the carboxylic groups are preferably provided by a termonomer such as methacrylic acid. The carboxyl groups containing acrylonitrile/butadiene rubbers **ABR** preferably are acrylonitrile/butadiene/methacrylic acid rubbers.

Particularly preferred carboxyl group containing acrylonitrile/butadiene rubbers **ABR** are available from Nippon Zeon under the trade name Hycar, now available under the trade name NIPOL.

The carboxyl group containing acrylonitrile/butadiene rubbers **ABR** preferably include from 10% - 50% by weight nitrile, more preferably 20% - 40% by weight nitrile and even more preferably 25% - 35% by weight nitrile.

The carboxyl group containing acrylonitrile/butadiene rubbers **ABR** preferably have a Mooney Viscosity (ML 1+4 at 100°C) of 20 - 60 MU (Mooney units). The Mooney viscosity refers to the viscosity measure of rubbers. It is defined as the shearing torque resisting rotation of a cylindrical metal disk (or rotor) embedded in rubber within a cylindrical cavity. The dimensions of the shearing disk viscometer, test temperatures, and procedures for determining Mooney viscosity are preferably defined in ASTM D1646 standard.

The composition preferably contains 5 - 40 wt-%, preferably 10 - 30 wt- %, more preferably 15 - 25 wt-%, based on the total weight of the epoxy resin **A** having on average more than one epoxide group per molecule.

The composition contains 0.075 - 0.5 wt.-%, preferably 0.08 - 0.4 wt.- %, of a composition **KP** comprising a blend of at least two different phosphites of the structure of formula (I) 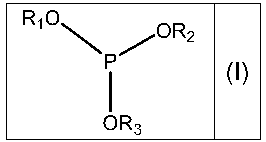 wherein R₁, R₂, and R₃ are independently selected alkylated aryl groups of the structure of formula (II) 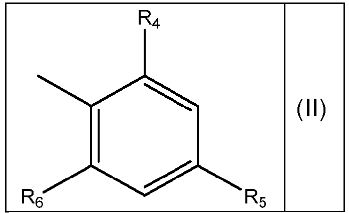 wherein R₄, R₅, and R₆ are independently selected from the group consisting of hydrogen and C1- C6 alkyl, provided that at least one of R₄, R₅, and R₆ is not hydrogen, based on the total amount of carboxyl group containing acrylonitrile/butadiene rubber **ABR.** It is preferred if said blend is a liquid at 23 °C.

It was surprisingly found that the mentioned amount of composition **KP** leads to a significant lower reduction in expansion after storage at 40° C. This can be seen in Table 1 in the comparison of Ex.1 - Ex.3 with Ref.1 - Ref. 3. Amounts of composition **KP** lower or higher than 0.075 - 0.5 wt.-%, based on the total amount of carboxyl group containing acrylonitrile/butadiene rubber **ABR,** showed significant higher reduction in expansion after storage at 40° C. It was further found that other phosphites like trisnonylphenyl phosphite (Ref.4) or a sterically hindered phenolic antioxidant (Ref.5) did not exhibit the same efficiency in expansion reduction. It was further surprisingly found that the problem of reduction in expansion after storage at 40° C did not occur in compositions containing epoxylated rubbers (Ref.6).

It can be preferred if the fraction of the composition **KP** is 0.075 - 0.25 wt.-%, preferably 0.075 - 0.20 wt.-%, more preferably 0.08 - 0.15 wt.-%, based on the total amount of carboxyl group containing acrylonitrile/butadiene rubber **ABR.** This is advantageous with respect to reduction in expansion after storage at 40° C. This can be seen in Table 1 in the comparison of Ex.1 - Ex.3. Ex.1 shows the lowest percentage of reduction in expansion after storage at 40° C compared to the initial expansion.

It can also be preferred if the fraction of the composition **KP** is 0.15 - 0.4 wt.-%, preferably 0.2 - 0.35 wt.-%, more preferably 0.25 - 0.35 wt.-%, based on the total amount of carboxyl group containing acrylonitrile/butadiene rubber **ABR.** This is advantageous with respect to the mechanical properties and adhesion. This can be seen in Table 1 in the comparison of Ex.1 - Ex.3.

Preferably, R₄, R₅, and R₆ are selected from the group consisting of hydrogen, methyl, ethyl, propyl, butyl, pentyl, and isomers thereof, again with the proviso that at least one of R₄, R₅, and R₆ is not hydrogen. More preferably, in the structure of formula (II) at least one of R₄, R₅, and R₆ in each phosphite is a C4 or C5 alkyl, most preferably tert-butyl or tert-pentyl.

Preferably, the composition **KP** comprises a blend of at least three different phosphites of the structure of formula (I). More preferably, the composition **KP** comprises a blend of at least four different phosphites of the structure of formula (I).

Most preferred, the phosphites are independently selected from the group consisting of tris 4-tert-butyl phenyl phosphite, tris 2,4-di-tert-butyl phenyl phosphite, bis(4-tert-butylphenyl)-2,4-di-tert-butylphenyl phosphite, bis (2,4-di-tert-butylphenyl)-4-tert-butylphenyl phosphite, tris 4-tert-pentyl phenyl phosphite, tris 2,4-di-tert-pentyl phenyl phosphite, bis(4-tert- pentylphenyl)-2,4-di-tert-pentylphenyl phosphite, and bis (2,4-di-tert-pentylphenyl)-4-tert-pentylphenyl phosphite.

A preferred composition **KP** is commercially available as WESTON^{®} 705T from Addivant Corperation.

On one hand, it was surprisingly found that compositions containing epoxylated acrylonitrile/butadiene rubbers instead of carboxyl group containing acrylonitrile/butadiene rubbers did not show a reduction of storage stability after storage at 40 °C for two weeks, as seen in the comparison of Ref.1 with Ref.6 in Table 1. On the other hand, it was surprisingly found that compositions containing carboxyl group containing acrylonitrile/butadiene rubbers together with the mentioned amount of composition **KP,** in contrast to Tris(nonylphenyl)phosphit or a sterically hindered phenolic antioxidant, did not only improve storage stability but also showed good mechanical properties and good adhesion on metallic substrates. This is shown in the comparison of Ex.1-3 with Ref.4 and Ref.5 in Table 1.

The one-component thermosetting epoxy resin composition might additionally comprise at least one toughness improver **D.** The toughness improvers **D** may be solid or liquid. More particularly the toughness improver **D** is selected from the group consisting of terminally blocked polyurethane polymers **D1,** liquid rubbers **D2** and core-shell polymers **D3.** With preference the additional toughness improver **D** is selected from the group consisting of terminally blocked polyurethane polymers **D1** and liquid rubbers **D2.** The before mentioned liquid rubbers **D2** are not the same as the carboxyl group containing acrylonitrile/butadiene rubber **ABR.**

The fraction of toughness improver **D** is preferably from 1 - 10 wt%, more preferably 2.5 -7.5 wt%, based on the total weight of the epoxy resin composition. It can also be preferable if the epoxy resin composition contains less than 2, preferably less than 1, less than 0.5, less than 0.1, most preferably no beforementioned toughness improver **D.**

In one preferred embodiment, the one-component thermosetting epoxy resin composition further comprises at least one filler **F.** Preference here is given to mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminium hydroxide, magnesium oxide, hollow ceramic beads, hollow glass beads, hollow organic beads, glass beads, glass fibres and colour pigments. Particularly preferred are fillers selected from the group consisting of calcium carbonate, calcium oxide, talc, glass fibres and fumed silicas, more preferably talc, glass fibres and fumed silicas.

The total fraction of the overall filler **F** is advantageously 5-50 weight-%, preferably 15-40 weight-%, 20-35 weight-%, based on the total weight of the epoxy resin composition.

The one-component thermosetting epoxy resin composition may comprise further constituents, especially catalysts, thixotropic agents, plasticizers, solvents, dyes and pigments, corrosion inhibitors, surfactants, defoamers and adhesion promoters.

The one-component thermosetting epoxy resin composition comprises at least one physical or chemical blowing agent **BA.**

Chemical blowing agents are organic or inorganic substances which, under the influence of temperature, humidity, electromagnetic radiation or chemicals, form or split off gaseous substances. Such substances are in particular azo-dicarbonamides, sulfohydrazides, hydrogen carbonates or carbonates. Compounds can be used as physical blowing agents which, for example when the temperature, pressure or volume changes, in particular when the temperature rises, change to the gaseous state of matter and thus form a foam structure through volume expansion. Such physical blowing agents are in particular liquids which evaporate at elevated temperature. Furthermore, gases or low-boiling liquids can be used as physical blowing agents, which are introduced into the composition in microencapsulated form. Both chemical and physical blowing agents are able to produce foam structures in polymer compositions.

Preferred physical blowing agents are expandable microspheres, consisting of a thermoplastic shell which is filled with thermally expandable liquids or gases. Such microspheres are commercially available, for example, under the trade name Expancel^{®} from Akzo Nobel, the Netherlands.

The at least one physical or chemical blowing agent **BA** preferably has an activation temperature from 120 °C to 220 ° C., preferably from 140 ° C to 200 ° C.

The proportion of the blowing agent **BA** is advantageously 0.1-5% by weight, preferably 0.1-3% by weight, in particular 1-2% by weight, based on the total weight of the epoxy resin composition.

The one-component thermosetting epoxy resin composition can also contain one or more additives. Examples of additives which can be used are processing aids such as waxes, antioxidants, UV stabilizers, dyes, biocides or flame retardants.

The proportion of processing aid is advantageously 1 to 8% by weight, preferably 2 to 5% by weight, based on the total weight of the composition.

The one-component thermosetting epoxy resin composition preferably has a melt flow index (MFI) of 0.5-15 g / 10 min, in particular 1-10 g / 10 min, preferably 1-5 g / 10 min, most preferably 1-3 g / 10 min.

The MFI is determined at 110 ° C., 2.16 kg in accordance with ASTM D1238, preferably with a melting time of 120 seconds.

The one-component thermosetting epoxy resin composition is preferably an injection moldable mixture, i.e. the mixture has a viscosity suitable for injection molding at the processing temperatures. It is particularly injection-moldable without foaming.

A particularly preferred thermosetting one-component epoxy resin composition comprises:
-30 - 90 wt%, 35 - 85 wt%, 40 -75 wt%, more preferably 45 - 60 wt%, based on the total weight of the one-component thermosetting epoxy resin composition, of the least one epoxy resin **A** having on average more than one epoxide group per molecule;
-0.1 to 15 wt%, more preferably 0.2 to 5 wt%, more particularly 0.5 - 3 wt%, based on the total weight of the one-component thermosetting epoxy resin composition, of the at least one latent hardener for epoxy resins, more particularly dicyandiamide;
-0.1-5% by weight, preferably 0.1-3% by weight, in particular 1-2% by weight, based on the total weight of the epoxy resin composition, of the blowing agent **BA;**
-5 - 40 wt-%, preferably 10 - 30 wt-%, more preferably 15 - 25 wt-%, of at least one carboxyl group containing acrylonitrile/butadiene rubber **ABR,** preferably with a Mooney Viscosity (ML 1+4 at 100°C) of 20 - 60 MU (Mooney units), based on the total amount of epoxy resin **A;**
-0.075 - 0.5 wt.-%, preferably 0.08 - 0.4 wt.-%, of a composition **KP** comprising a blend of at least two different phosphites of the structure of formula (I) 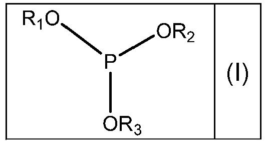 wherein R₁, R₂, and R₃ are independently selected alkylated aryl groups of the structure of formula (II) 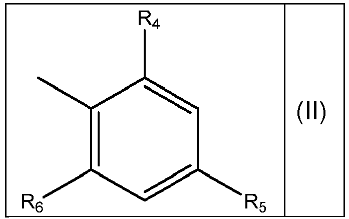 wherein R₄, R₅, and R₆ are independently selected from the group consisting of hydrogen and C1- C6 alkyl, provided that at least one of R₄, R₅, and R₆ is not hydrogen, based on the total amount of carboxyl group containing acrylonitrile/butadiene rubber **ABR,** preferably in the structure of formula (II) at least one of R₄, R₅, and R₆ in each phosphite is a C4 or C5 alkyl, most preferably tert-butyl or tert-pentyl, it is most preferred if the phosphites are independently selected from the group consisting of tris 4-tert-butyl phenyl phosphite, tris 2,4-di-tert-butyl phenyl phosphite, bis(4- tert-butylphenyl)-2,4-di-tert-butylphenyl phosphite, bis (2,4-di-tert-butylphenyl)-4-tert-butylphenyl phosphite, tris 4-tert-pentyl phenyl phosphite, tris 2,4-di-tert-pentyl phenyl phosphite, bis(4-tert- pentylphenyl)-2,4-di-tert-pentylphenyl phosphite, and bis (2,4-di-tert-pentylphenyl)-4-tert- pentylphenyl phosphite;
-preferably 5-40 weight%, preferably 20-40 weight%, based on the total weight of the epoxy resin composition, of a filler **F** selected from the group consisting of calcium carbonate, calcium oxide, talc, glass fibres and fumed silicas, more preferably talc, glass fibres and fumed silicas.

It may further be advantageous if the preferred one-component thermosetting epoxy resin composition consists to an extent of more than 80 weight%, preferably more than 90 weight%, more particularly more than 95 weight%, especially preferably more than 98 weight%, most preferably more than 99 weight%, based on the total weight of the epoxy resin composition, of the aforementioned constituents.

The one-component thermosetting epoxy resin composition is preferably tack-free at 23 ° C. The term "tack-free" is understood here to mean immediate tack or "tack", which is so low at 23 ° C that when pressed with a thumb with a pressure of about 5 kg for 1 second on the surface of the one-component thermosetting epoxy resin composition, the thumb does not stick to the surface of the composition layer or the one-component thermosetting epoxy resin composition cannot be raised.

The compositions according to the present invention can be obtained by mixing the components in any suitable mixing device, e.g. In a dispersion mixer, planetary mixer, twin screw mixer, continuous mixer, extruder or twin-screw extruder.

After mixing, the resulting composition can be molded into their desired shape e.g. by extruding, blow molding, pelletizing, injection molding, compression molding, stamping or punching or any other suitable method.

The mixing of the components preferably comprises an extrusion step, the mixed and extruded composition then being granulated. The granulated composition is then preferably brought into its desired shape by injection molding.

The foaming of the one-component thermosetting epoxy resin composition is preferably carried out independently of the curing of the epoxy resin composition, in particular beforehand. As a result, the epoxy resin composition cures only when the foaming of the epoxy resin composition has largely taken place. Otherwise, the epoxy resin composition hardens before it has reached the intended place through the foaming. It is therefore preferred that the curing temperature of the epoxy resin composition is above the foaming temperature of the epoxy resin composition.

Preferably, the expandable epoxy resin compositions show the following reduction in expansion upon activation conditions after storage for 14 days @ 40 °C compared to the expansion of the expandable epoxy resin composition immediately after production of the composition (measurements as described in the experimental section):
- Expansion 40'@180°C: less than 65 %, preferably less than 60 %, more preferably less than 55 %.

I if further preferred, if the expandable epoxy resin compositions show the following adhesion and mechanical properties (measurements as described in the experimental section):
- LSS on HDG: ≥1.5 MPa, preferably ≥1.75 MPa, more preferably ≥2 MPa; and/or, preferably and
- Compression strength: ≥8 MPa, preferably ≥9 MPa, more preferably ≥10 MPa; and/or, preferably and
- Compression Modulus: ≥350 MPa, preferably ≥400 MPa, more preferably ≥425 MPa; and/or, preferably and
- Retain at 30%: ≥60 %, preferably ≥ 70%, more preferably ≥80 %.

Another aspect of the invention are reinforcement elements comprising the one-component heat-curing epoxy resin composition, in particular for reinforcement in the cavities of structural components.

The one-component thermosetting epoxy resin composition is preferably applied or attached to a carrier part.

This carrier part can consist of any materials. Preferred materials are plastics, in particular polyurethanes, polyamides, polyesters and polyolefins, preferably high-temperature-resistant polymers such as poly (phenylene ethers), polysulfones or polyethersulfones, which in particular are also foamed; Metals, especially aluminum and steel; or any combination of these materials.

Furthermore, the carrier part can have any structure and structure. For example, it can be solid or hollow or have a lattice-like structure. The surface of the carrier part can typically be smooth, rough or structured. The carrier part can also contribute to the structural reinforcement in addition to its function as a carrier for the foamable material.

It is also possible that reinforcing elements have no carrier part and consist entirely of the one-component thermosetting epoxy resin composition.

The reinforcement elements comprising a carrier part and the one-component heat-curing epoxy resin composition are preferably produced by injection molding.

**If** the carrier part consists of a material that can be processed by injection molding, a two-component injection molding process is usually used. First, a first component, in this case the carrier part, is injected. After this first component has solidified, the cavity in the mold is enlarged or adapted, or the molded part is placed in a new mold, and a second component, in this case the epoxy resin composition, is molded onto the first component with a second injection unit. **If** the carrier part consists of a material that cannot be produced by the injection molding process, for example of a metal, the carrier part is placed in an appropriate tool and the epoxy resin composition is injection molded onto the carrier part.

Of course, there is also the possibility of fastening the epoxy resin composition to a carrier part by any other fastening means or method.

For the reinforcing elements mentioned, it is further advantageous if the epoxy resin composition can be foamed and cured thermally, at a temperature from 120 °C to 220 ° C., preferably from 140 ° C to 200 ° C, preferably within a time period at said temperature of 10 to 60 min.

Furthermore, the invention comprises the use of a reinforcing element, as described above, for reinforcing cavities in structural components. Structural components of this type are preferably used in bodies and / or frames of means of transport and transportation, in particular of vehicles on water or on land or of aircraft. The invention preferably includes the use of a reinforcing element according to the invention in bodies or frames of automobiles (in particular A, **B,** C or D pillars) trucks, railroad cars, boats, ships, helicopters and airplanes, mostly preferably in automobiles.

A further aspect of the present invention therefore relates to a method for reinforcing structural components comprising the steps
i) placing the reinforcement element in a cavity according to the previous description;
ii) heating the reinforcement element to a temperature from 120 °C to 220 °C, preferably from 140 °C to 200 °C, preferably for 10 to 60 min.

Preferably, step i) takes place before step ii).

The invention is elucidated further in the text below by means of examples which, however, are not intended to restrict the invention in any way.

### Examples

Raw materials and test methods used for the testing of the respective properties in the examples were as follows:

| | |
|---|---|
| Solid epoxy resin | Solid epoxy resin, (bisphenol A diglycidyl ether based), Dow |
| ABR1 | Nipol 1472 X from Zeon Chemicals, Mooney Viscosity (ML 1+4 at 100°C) of 25 MU, Carboxyl Content 0.07-0.08 EPHR, 27 % by weight nitrile. |
| ABR 2 | Nipol 1472 HV from Zeon Chemicals, Mooney Viscosity (ML 1+4 at 100°C) of 41 MU, Carboxyl Content 0.07-0.08 EPHR, 27 % by weight nitrile. |
| Epoxylated-NBR | Hypox RK-84L from Huntsman, adduct of solid diglycidyl ether of Bisphenol A and liquid rubber, ETBN content 32%, Epoxide Equivalent Weight 1,250 - 1,500 g/eq, Ring and Ball Softening Point 100°C. |
| Glass fibers | Chopped glass fibers, Lanxess |
| Fumed Silica | Fumed Silica, Wacker |
| Talc | Clay mineral composed of hydrated magnesium silicate |
| Process wax | Luwax, ethylene homopolymer wax, BTC Europe |
| Hydrocarbon resin | C5/C9 Hydrocarbon Resin, Wingtack Extra |
| Dicy | Dicyandiamide |
| Substituted urea | Accelerator |
| Blowing agent | Chemical blowing agent, OBSH |
| Weston 705T | WESTON^{®} 705T from Addivant Corperation, 99.5 wt.-% Reaction mass of bis[2,4-bis(2-methylbutan-2-yl)phenyl] 4-(2-methylbutan-2-yl)phenyl phosphite and 2,4-bis(2-methylbutan-2-yl)phenyl bis[4-(2-methylbutan-2-yl)phenyl] phosphite and tris[4-(2-methylbutan-2-yl)phenyl] phosphite, CAS 939402-02-5 / 0.5 wt.-% Triisopropanolamine |
| TNPP | WESTON^{®} TNPP from Addivant Corperation, Trisnonylphenyl Phosphite, CAS : 26523-78-4. |
| Irganox 1010 | Irganox^{®} 1010, BASF, pentaerythritol tetrakis[3-[3,5-di-tert-butyl-4-hydroxyphenyl]propionate, CAS: 6683-19-8, sterically hindered phenolic antioxidant. |

| | |
|---|---|
| Raw materials used | |

### Preparation of the compositions

According to the information in Table 1, the reference compositions Ref.1-Ref. 5 and the compositions Ex.1-Ex.3 according to the invention were produced. The amounts in Table 1 are in parts by weight. The raw materials used were mixed with a tumble mixer for 10 min. The mixtures were then introduced into a twin-screw extruder (Dr. Collin ZK 25 T SCD15) and compounded at a throughput of 2.5 kg per hour. The discharge took place through a 1-hole nozzle (3mm) on a conveyor belt. The strand obtained was cooled with forced air and then granulated using the Dr.Collin granulator integrated in the system. The granules obtained were then processed into 3 mm thick sheets using a Krauss-Maffei 110t injection molding machine.

Test methods used for the testing of the respective properties in the examples were as follows:

### Determination of foam density / volume expansion (expansion)

The expansion stability was tested in all samples by heat treatment of the individual samples for 40 min at 180 ° C in an oven.

Volume expansions were quantified for each sample by measuring the density before and after expansion. The densities were determined according to **DIN EN** ISO 1183 using the water immersion method (Archimedes principle) in deionized water and a precision balance to measure the mass.

Ageing test was done exposing the uncured material for 14 days at 40° C and afterwards the volume expansion was measured according to the method and temperatures mention above.

### Compression strength/ Compression modulus/ Retain at 30%

To determine the mechanical and ductile properties, the uncured material was brought into a cylindrical tube lined with release paper with an inside diameter of 30 +/- 2 mm in accordance with ASTM D1621 and cured for 30 minutes after the material reached 180°C. After the bake is complete, the material was sanded until the remaining test piece is 30mm in diameter x 60mm in height.

After a conditioning time of 24 hours at 23°C, the cylinder was placed between 2 compression plates and the test was started at a speed of 10mm / min to 30% strain. Compression modulus, strength and retention at 30% strain were recorded.

### Adhesion test, tensile shear strength (TSS) (SAE J1523)

Cleaned and then oiled test specimens of steel (thickness 1.8 mm) were bonded with a piece of material of 25 × 25 x 2 mm and using 4 mm teflon spacers and cured in a fixture to maintain the 4 mm cured material thickness. The curing conditions were 20 min at 171°C oven temperature.

The tensile shear strength was determined on a tensile machine at a tensile speed of 13 mm / min in a 3-fold determination according to SAEJ 1523.

The following visual assessment of the fracture appearance obtained from tensile shear strength test was used: The results were divided into CF (cohesive fracture) and AF (adhesive fracture) and the amount of the mentioned fracture was determined in % of the total fracture pattern. All the compositions and Ex.1 - Ex. 3 and Ref.1 - Ref.6 showed 100 % CF.

**Table 1**

| | | Ref.1 | Ref.2 | Ex.1 | Ex.2 | Ex.3 | Ref.3 | Ref.4 | Ref.5 | Ref.6 |
|---|---|---|---|---|---|---|---|---|---|---|
| Solid epoxy resin | [wt-%] | 50.4 | 50.4 | 50.4 | 50.4 | 50.4 | 50.4 | 50.4 | 50.4 | 50.4 |
| ABR1 | [wt-%] | 5.2 | 5.2 | 5.2 | 5.2 | 5.2 | 5.2 | 5.2 | 5.2 | |
| ABR2 | [wt-%] | 5.2 | 5.2 | 5.2 | 5.2 | 5.2 | 5.2 | 5.2 | 5.2 | |
| Epoxylated-NBR | [wt-%] | | | | | | | | | 10.4 |
| Glass fibres | [wt-%] | 10.3 | 10.3 | 10.3 | 10.3 | 10.3 | 10.3 | 10.3 | 10.3 | 10.3 |
| Fumed Silica | [wt-%] | 2.0 | 2.0 | 2.0 | 2.0 | 2.0 | 2.0 | 2.0 | 2.0 | 2.0 |
| Talc | [wt-%] | 15.8 | 15.8 | 15.8 | 15.8 | 15.8 | 15.8 | 15.8 | 15.8 | 15.8 |
| Process wax | [wt-%] | 4.3 | 4.3 | 4.3 | 4.3 | 4.3 | 4.3 | 4.3 | 4.3 | 4.3 |
| Hydrocarbon resin | [wt-%] | 3.9 | 3.9 | 3.9 | 3.9 | 3.9 | 3.9 | 3.9 | 3.9 | 3.9 |
| Dicy | [wt-%] | 1.2 | 1.2 | 1.2 | 1.2 | 1.2 | 1.2 | 1.2 | 1.2 | 1.2 |
| substituted urea | [wt-%] | 0.3 | 0.3 | 0.3 | 0.3 | 0.3 | 0.3 | 0.3 | 0.3 | 0.3 |
| Blowing agent | [wt-%] | 1.4 | 1.4 | 1.4 | 1.4 | 1.4 | 1.4 | 1.4 | 1.4 | 1.4 |
| Weston 705 T | [wt-%] | - | 0.005 | 0.01 | 0.02 | 0.03 | 0.06 | - | - | - |
| TNPP | [wt-%] | - | - | - | - | - | - | 0.03 | - | - |
| Irganox 1010 | [wt-%] | - | - | - | - | - | - | - | 0.01 | - |
| **TOTAL** | [wt-%] | 100 | 100 | 100 | 100 | 100 | 100 | 100 | 100 | 100 |
| Wt.-% stabilizer of (ABR1+ABR2) | [wt-%] | - | 0.05 | 0.10 | 0.19 | 0.29 | 0.58 | 0.29 | 0.10 | - |
| **Expansion 40'@180°C, initial** | [%] | 285 | 358 | 278 | 332 | 345 | 336 | 348 | 298 | 392 |
| **Expansion 40'@180°C, 14d 40°C** | [%] | 121 | 135 | 166 | 156 | 158 | 126 | 148 | 124 | 312 |
| **Percentage initial expansion** | [%] | 42 | 38 | 60 | 47 | 46 | 38 | 43 | 42 | 80 |
| **LSS on HDG bake 20'@171°C (4107S)** | [MPa] | 2.5 | 2.3 | 2.0 | 2.3 | 2.3 | 2.3 | 2.4 | 2.2 | 0.5 |
| **LSS on HDG bake 20'@171°C (61AUS)** | [MPa] | 2.6 | 2.4 | 2.0 | 2.3 | 2.4 | 2.4 | 2.5 | 2.4 | 0.5 |
| **Compression strength** | [MPa] | 10.90 | 10.10 | 10.30 | 10.40 | 10.70 | 11.30 | 11.30 | 8.60 | 3.00 |
| **Compression Modulus** | [MPa] | 402 | 438 | 432 | 460 | 485 | 526 | 479 | 318 | 211 |
| **Retain at 30%** | [%] | 84 | 85 | 82 | 85 | 97 | 69 | 28 | 93 | 65 |

## Claims

1. One-component thermosetting epoxy resin composition, comprising
a) at least one epoxy resin **A** having on average more than one epoxide group per molecule;
b) at least one latent hardener for epoxy resins; and
c) at least one physical or chemical blowing agent **BA;** and
d) at least one carboxyl group containing acrylonitrile/butadiene rubber **ABR,** preferably with a Mooney Viscosity (ML 1+4 at 100°C) of 20 - 60 MU (Mooney units), determined as defined in the specification; and
e) 0.075 - 0.5 wt.-%, preferably 0.08 - 0.4 wt.-%, of a composition KP comprising a blend of at least two different phosphites of the structure of formula (I) 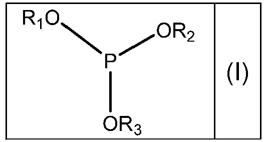 wherein R₁, R₂, and R₃ are independently selected alkylated aryl groups of the structure of formula (II) 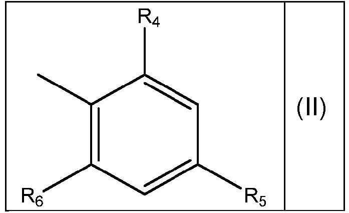 wherein R₄, R₅, and R₆ are independently selected from the group consisting of hydrogen and C1- C6 alkyl, provided that at least one of R₄, R₅, and R₆ is not hydrogen, based on the total amount of carboxyl group containing acrylonitrile/butadiene rubber **ABR.**

2. One-component thermosetting epoxy resin composition according to claim 1, wherein the fraction of the epoxy resin A having on average more than one epoxide group per molecule is from 30 - 90 wt%, 35 - 85 wt%, 40 -75 wt%, more preferably 45 - 60 wt%, based on the total weight of the one-component thermosetting epoxy resin composition.

3. One-component thermosetting epoxy resin composition according to any of the preceding claims, wherein the epoxy resin **A** is a solid epoxy resin.

4. One-component thermosetting epoxy resin composition according to any of the preceding claims, wherein the fraction of the carboxyl group containing acrylonitrile/butadiene rubber **ABR** is from 5 - 40 wt-%, preferably 10 - 30 wt-%, more preferably 15 - 25 wt-%, based on the total weight of the epoxy resin **A** having on average more than one epoxide group per molecule.

5. One-component thermosetting epoxy resin composition according to any of the preceding claims, wherein the structure of formula (II) at least one of R₄, R₅, and R₆ in each phosphite is a C4 or C5 alkyl, most preferably tert-butyl or tert-pentyl.

6. One-component thermosetting epoxy resin composition according to any of the preceding claims, wherein the composition **KP** comprises a blend of at least three, preferably four, different phosphites of the structure of formula (I).

7. One-component thermosetting epoxy resin composition according to any of the preceding claims, wherein the phosphites are independently selected from the group consisting of tris 4-tert-butyl phenyl phosphite, tris 2,4-di-tert-butyl phenyl phosphite, bis(4- tert-butylphenyl)-2,4-di-tert-butylphenyl phosphite, bis (2,4-di-tert-butylphenyl)-4-tert-butylphenyl phosphite, tris 4-tert-pentyl phenyl phosphite, tris 2,4-di-tert-pentyl phenyl phosphite, bis(4-tert- pentylphenyl)-2,4-di-tert-pentylphenyl phosphite, and bis (2,4-di-tert-pentylphenyl)-4-tert- pentylphenyl phosphite.

8. One-component thermosetting epoxy resin composition according to any of the preceding claims, wherein the fraction of the composition **KP** is 0.075 - 0.25 wt.-%, preferably 0.075 - 0.20 wt.-%, more preferably 0.08 - 0.15 wt.-%, based on the total amount of carboxyl group containing acrylonitrile/butadiene rubber **ABR.**

9. One-component thermosetting epoxy resin composition according to claims 1 to 7, wherein the fraction of the composition **KP** is 0.15 - 0.4 wt.- %, preferably 0.2 - 0.35 wt.-%, more preferably 0.25 - 0.35 wt.-%, based on the total amount of carboxyl group containing acrylonitrile/butadiene rubber **ABR.**

10. One-component thermosetting epoxy resin composition according to any of the preceding claims, wherein the latent hardener is selected from dicyandiamide, guanamines, guanidines, aminoguanidines and derivatives thereof, substituted ureas, imidazoles and amine complexes, preferably dicyandiamide.

11. One-component thermosetting epoxy resin composition according to any of the preceding claims, wherein the one-component thermosetting epoxy resin composition further comprises at least one filler **F,** selected from the group consisting of calcium carbonate, calcium oxide, talc, glass fibres and fumed silicas, more preferably talc, glass fibres and fumed silicas.

12. One-component thermosetting epoxy resin composition according to any of the preceding claims, wherein the proportion of the blowing agent **BA** is 0.1-5% by weight, preferably 0.1-3% by weight, in particular 1-2% by weight, based on the total weight of the epoxy resin composition

13. One-component thermosetting epoxy resin composition according to any of the preceding claims, wherein the one-component thermosetting epoxy resin composition has a melt flow index (MFI) of 0.5-15 g / 10 min, in particular 1-10 g / 10 min, preferably 1-5 g / 10 min, most preferably 1-3 g / 10 min, determined at 110 ° C., 2.16 kg in accordance with ASTM D1238.

14. A reinforcement element comprising the one-component heat-curing epoxy resin composition according to claims 1 to 13, in particular for reinforcement in the cavities of structural components, preferably in bodies and / or frames of means of transport and transportation.

15. A method for reinforcing structural components comprising the steps i) placing a reinforcement element according to claim 14 in a cavity of a structural component, preferably in bodies and / or frames of means of transport and transportation; ii) heating the reinforcement element to a temperature from 120 °C to 220 °C, preferably from 140 °C to 200 °C, preferably for 10 to 60 min.

## Patentansprüche

1. Wärmehärtende Einkomponenten-Epoxidharzzusammensetzung umfassend:
- mindestens ein Epoxidharz A mit im Mittel mehr als einer Epoxidgruppe pro Molekül;
b) mindestens einen latenten Härter für Epoxidharze; und
c) mindestens ein physikalisches oder chemisches Treibmittel BA; und
d) mindestens einen Carboxylgruppe-enthaltenden Acrylnitril/Butadien-Kautschuk ABR, vorzugsweise mit einer Mooney-Viskosität (ML 1+4 bei 100 °C) von 20-60 MU (Mooney-Einheiten), bestimmt wie in der Beschreibung definiert; und
e) 0,075-0,5 Gew.-%, vorzugsweise 0,08-0,4 Gew.-%, an einer Zusammensetzung KP, die eine Mischung aus mindestens zwei verschiedenen Phosphiten der Struktur der Formel (I) umfasst 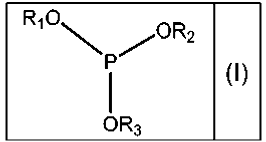 wobei R₁, R₂ und R₃ unabhängig ausgewählte alkylierte Arylgruppen der Struktur der Formel (II) sind 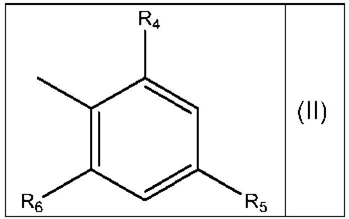 wobei R₄, R₅ und R₆ unabhängig ausgewählt sind aus der Gruppe bestehend aus Wasserstoff und C1-C6-Alkyl, mit der Maßgabe, dass mindestens eines von R₄, R₅ und R₆ nicht Wasserstoff ist, bezogen auf die Gesamtmenge an Carboxylgruppe-enthaltendem Acrylnitril/Butadien-Kautschuk ABR.

2. Wärmehärtende Einkomponenten-Epoxidharzzusammensetzung nach Anspruch 1, wobei der Anteil des Epoxidharzes A mit im Mittel mehr als einer Epoxidgruppe pro Molekül 30-90 Gew.-%, 35-85 Gew.-%, 40-75 Gew.-%, bevorzugter 45-60 Gew.-%, bezogen auf das Gesamtgewicht der Einkomponenten-wärmehärtbaren Epoxidharzzusammensetzung, beträgt.

3. Wärmehärtende Einkomponenten-Epoxidharzzusammensetzung nach einem der vorstehenden Ansprüche, wobei das Epoxidharz A ein festes Epoxidharz ist.

4. Wärmehärtende Einkomponenten-Epoxidharzzusammensetzung nach einem der vorstehenden Ansprüche, wobei der Anteil des Carboxylgruppe-enthaltenden Acrylnitril/Butadien-Kautschuks ABR von 5-40 Gew.-%, vorzugsweise 10-30 Gew.-%, bevorzugter 15-25 Gew.-%, bezogen auf das Gesamtgewicht des Epoxidharzes A mit im Mittel mehr als einer Epoxidgruppe pro Molekül, beträgt.

5. Wärmehärtende Einkomponenten-Epoxidharzzusammensetzung nach einem der vorstehenden Ansprüche, wobei in der Struktur der Formel (II) mindestens eines von R₄, R₅ und R₆ in jedem Phosphit ein C4- oder C5-Alkyl, höchst bevorzugt tert-Butyl oder tert-Pentyl, ist.

6. Wärmehärtende Einkomponenten-Epoxidharzzusammensetzung nach einem der vorstehenden Ansprüche, wobei die Zusammensetzung KP eine Mischung aus mindestens drei, vorzugsweise vier, verschiedenen Phosphiten der Struktur der Formel (I) umfasst.

7. Wärmehärtende Einkomponenten-Epoxidharzzusammensetzung nach einem der vorstehenden Ansprüche, wobei die Phosphite unabhängig ausgewählt sind aus der Gruppe bestehend aus Tris-4-tert-butylphenylphosphit, Tris-2,4-di-tert-butylphenylphosphit, Bis(4-tert-butylphenyl)-2,4-di-tert-butylphenylphosphit, Bis(2,4-di-tert-butylphenyl)-4-tert-butylphenylphosphit, Tris-4-tert-pentylphenylphosphit, Tris-2,4-di-tert-pentylphenylphosphit, Bis(4-tert-pentylphenyl)-2,4-di-tert-pentylphenylphosphit und Bis(2,4-di-tert-pentylphenyl)-4-tert-pentylphenylphosphit.

8. Wärmehärtende Einkomponenten-Epoxidharzzusammensetzung nach einem der vorstehenden Ansprüche, wobei der Anteil der Zusammensetzung KP 0,075-0,25 Gew.-%, vorzugsweise 0,075-0,20 Gew.-%, bevorzugter 0,08-0,15 Gew.-%, bezogen auf die Gesamtmenge an Carboxylgruppe-enthaltendem Acrylnitril/Butadien-Kautschuk ABR, beträgt.

9. Wärmehärtende Einkomponenten-Epoxidharzzusammensetzung nach Ansprüchen 1 bis 7, wobei der Anteil der Zusammensetzung KP 0,15-0,4 Gew.-%, vorzugsweise 0,2-0,35 Gew.-%, bevorzugter 0,25-0,35 Gew.-%, bezogen auf die Gesamtmenge an Carboxylgruppe-enthaltendem Acrylnitril/Butadien-Kautschuk ABR, beträgt.

10. Wärmehärtende Einkomponenten-Epoxidharzzusammensetzung nach einem der vorstehenden Ansprüche, wobei der latente Härter ausgewählt ist aus Dicyandiamid, Guanaminen, Guanidinen, Aminoguanidinen und Derivaten davon, substituierten Harnstoffen, Imidazolen und Aminkomplexen, vorzugsweise Dicyandiamid.

11. Wärmehärtende Einkomponenten-Epoxidharzzusammensetzung nach einem der vorstehenden Ansprüche, wobei die wärmehärtende Einkomponenten-Epoxidharzzusammensetzung ferner mindestens einen Füllstoff F ausgewählt aus der Gruppe bestehend aus Calciumcarbonat, Calciumoxid, Talkum, Glasfasern und pyrogenen Kieselsäuren, bevorzugter Talkum, Glasfasern und pyrogenen Kieselsäuren, umfasst.

12. Wärmehärtende Einkomponenten-Epoxidharzzusammensetzung nach einem der vorstehenden Ansprüche, wobei der Anteil des Treibmittels BA 0,1-5 Gew.-%, vorzugsweise 0,1-3 Gew.-%, insbesondere 1-2 Gew.- %, bezogen auf das Gesamtgewicht der Epoxidharzzusammensetzung, beträgt

13. Wärmehärtende Einkomponenten-Epoxidharzzusammensetzung nach einem der vorstehenden Ansprüche, wobei die wärmehärtende Einkomponenten-Epoxidharzzusammensetzung einen Schmelzflussindex (MFI) von 0,5-15 g/10 min, insbesondere 1-10 g/10 min, vorzugsweise 1-5 g/10 min, höchst bevorzugt 1-3 g/10 min, bestimmt bei 110 °C, 2,16 kg gemäß ASTM D1238, aufweist.

14. Verstärkungselement umfassend die wärmehärtende Einkomponenten-Epoxidharzzusammensetzung nach Ansprüchen 1 bis 13, insbesondere zur Verstärkung in den Hohlräumen von Strukturkomponenten, vorzugsweise in Körpern und/oder Rahmen von Transport- und Verkehrsmitteln.

15. Verfahren zur Verstärkung von Strukturkomponenten, umfassend die Schritte
i) Anordnen eines Verstärkungselements nach Anspruch 14 in einem Hohlraum einer Strukturkomponente, vorzugsweise in Körpern und/oder Rahmen von Transport- und Verkehrsmitteln;
ii) Erhitzen des Verstärkungselements auf eine Temperatur von 120 °C bis 220 °C, vorzugsweise von 140 C °bis 200 °C, vorzugsweise für 10 bis 60 min.

## Revendications

1. Composition de résine époxy thermodurcissable monocomposant, comprenant
a) au moins une résine époxy A ayant en moyenne plus d'un groupe époxyde par molécule ;
b) au moins un durcisseur latent pour résines époxy ; et
c) au moins un agent gonflant physique ou chimique BA ; et
d) au moins un groupe carboxyle contenant un caoutchouc acrylonitrile/butadiène ABR, de préférence ayant une viscosité Mooney (ML 1+4 à 100 °C) de 20 à 60 MU (unités Mooney), déterminée comme défini dans la description ; et
e) 0,075 à 0,5 % en poids, de préférence 0,08 à 0,4 % en poids, d'une composition KP comprenant un mélange d'au moins deux phosphites différents dans la structure de la formule (I) 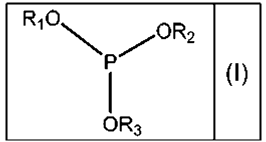 dans laquelle R₁, R₂ et R₃ sont des groupes aryle alkylés choisis indépendamment dans la structure de la formule (II) 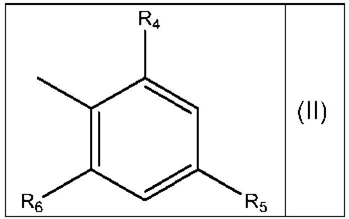 dans laquelle R₄, R₅ et R₆ sont indépendamment choisis dans le groupe constitué de l'hydrogène et de l'alkyle en C1-C6, à condition qu'au moins un parmi R₄, R₅ et R₆ ne soit pas l'hydrogène, par rapport à la quantité totale de caoutchouc acrylonitrile/butadiène ABR contenant un groupe carboxyle.

2. Composition de résine époxy thermodurcissable monocomposant selon la revendication 1, dans laquelle la fraction de la résine époxy A ayant en moyenne plus d'un groupe époxyde par molécule est compris entre 30 et 90 % en poids, entre 35 et 85 % en poids, entre 40 et 75 % en poids, plus préférablement entre 45 et 60 % en poids, par rapport au poids total de la composition de résine époxy thermodurcissable monocomposant.

3. Composition de résine époxy thermodurcissable monocomposant selon l'une quelconque des revendications précédentes, dans laquelle la résine époxy A est une résine époxy solide.

4. Composition de résine époxy thermodurcissable monocomposant selon l'une quelconque des revendications précédentes, dans laquelle la fraction du caoutchouc acrylonitrile/butadiène ABR contenant un groupe carboxyle est comprise entre 5 et 40 % en poids, de préférence entre 10 et 30 % en poids, plus préférablement entre 15 et 25 % en poids, par rapport au poids total de la résine époxy A ayant en moyenne plus d'un groupe époxyde par molécule.

5. Composition de résine époxy thermodurcissable monocomposant selon l'une quelconque des revendications précédentes, dans laquelle dans la structure de la formule (II), au moins un des groupes R₄, R₅ et R₆ dans chaque phosphite est un alkyle en C4 ou C5, plus préférablement tert-butyle ou tert-pentyle.

6. Composition de résine époxy thermodurcissable monocomposant selon l'une quelconque des revendications précédentes, dans laquelle la composition KP comprend un mélange d'au moins trois, de préférence quatre, phosphites différents dans la structure de la formule (I) .

7. Composition de résine époxy thermodurcissable monocomposant selon l'une quelconque des revendications précédentes, dans laquelle les phosphites sont choisis indépendamment dans le groupe constitué de tris 4-tert-butylphényle phosphite, de tris 2,4-di-tert-butylphényle phosphite, bis(4-tert-butylphényle)-2,4-di-tert-butylphényle phosphite, bis (2,4-di-tert-butylphényle)-4-tert-butylphényle phosphite, tris 4-tert-pentylphényle phosphite, tris 2,4-di-tert-pentylphényle phosphite, bis(4-tert-pentylphényle)-2,4-di-tert-pentylphényle phosphite, et bis (2,4-di-tert-pentylphényle)-4-tert-pentylphényle phosphite.

8. Composition de résine époxy thermodurcissable monocomposant selon l'une quelconque des revendications précédentes, dans laquelle la fraction de la composition KP est comprise entre 0,075 et 0,25 % en poids, de préférence entre 0,075 et 0,20 % en poids, plus préférablement entre 0,08 et 0,15 % en poids, par rapport à la quantité totale de caoutchouc acrylonitrile/butadiène ABR contenant un groupe carboxyle.

9. Composition de résine époxy thermodurcissable monocomposant selon les revendications 1 à 7, dans laquelle la fraction de la composition KP est comprise entre 0,15 et 0,4 % en poids, de préférence entre 0,2 et 0,35 % en poids, plus préférablement entre 0,25 et 0,35 % en poids, par rapport à la quantité totale de caoutchouc acrylonitrile/butadiène ABR contenant un groupe carboxyle.

10. Composition de résine époxy thermodurcissable monocomposant selon l'une quelconque des revendications précédentes, dans laquelle le durcisseur latent est choisi parmi le dicyandiamide, les guanamines, les guanidines, les aminoguanidines et leurs dérivés, les urées substituées, les imidazoles et les complexes d'amines, de préférence le dicyandiamide.

11. Composition de résine époxy thermodurcissable monocomposant selon l'une quelconque des revendications précédentes, dans laquelle la composition de résine époxy thermodurcissable monocomposant comprend en outre au moins une charge F, choisie dans le groupe constitué du carbonate de calcium, de l'oxyde de calcium, du talc, de fibres de verre et de silices fumées, plus préférablement du talc, de fibres de verre et de silices fumées.

12. Composition de résine époxy thermodurcissable monocomposant selon l'une quelconque des revendications précédentes, dans laquelle la proportion de l'agent gonflant BA est comprise entre 0,1 et 5 % en poids, de préférence entre 0,1 et 3 % en poids, en particulier entre 1 et 2 % en poids, par rapport au poids total de la composition de résine époxy.

13. Composition de résine époxy thermodurcissable monocomposant selon l'une quelconque des revendications précédentes, dans laquelle la composition de résine époxy thermodurcissable monocomposant a un indice de fluidité à chaud (MFI) de 0,5-15 g/10 min, en particulier de 1-10 g/10 min, de préférence de 1-5 g/10 min, plus préférablement de 1-3 g/10 min, déterminé à 110 °C, 2,16 kg selon la norme ASTM D1238.

14. Élément de renforcement comprenant la composition de résine époxy durcissable à la chaleur monocomposant selon les revendications 1 à 13, en particulier pour le renforcement dans les cavités de composants structuraux, de préférence dans des corps et/ou des cadres de moyens de transport et de transport.

15. Procédé de renforcement de composants structuraux comprenant les étapes de
i) placement d'un élément de renforcement selon la revendication 14 dans une cavité d'un composant structural, de préférence dans des corps et/ou des cadres de moyens de transport et de transport ;
ii) chauffage de l'élément de renforcement jusqu'à une température de 120 °C à 220 °C, de préférence de 140 °C à 200 °C, de préférence pendant 10 à 60 min.
